# EUROPEAN PATENT APPLICATION

(11) **EP 4 626 048 A1**
(43) Date of publication of application: **01.10.2025**
(21) Application number: 24759638.0
(22) Date of filing: 19.02.2024
(51) Int. Cl.: H04W 8/00

(54) **DEVICE COMMUNICATION METHOD AND APPARATUS, AND DEVICE AND SYSTEM**

(30) Priority: 22.02.2023 CN 202310203168
(71) Applicant: Huawei Technologies Co., Ltd., Shenzhen, Guangdong 518129 (CN)
(72) Inventor: WANG, Qinkuan, Shenzhen, Guangdong 518129 (CN); YU, Guitang, Shenzhen, Guangdong 518129 (CN); LIU, Ye, Shenzhen, Guangdong 518129 (CN); DING, Guozhi, Shenzhen, Guangdong 518129 (CN)
(74) Representative: Gill Jennings & Every LLP
(86) International application number: PCT/CN2024/077557
(87) International publication number: WO 2024/174961

(57) **Abstract**

Embodiments of this application provide a device communication method, apparatus, and system, and a device. The method includes: receiving discovery request signaling on a first channel, where the discovery request signaling is used by a second terminal to request device discovery; sending discovery request response signaling to the second terminal; and receiving connection request signaling, and sending first control signaling, where the first control signaling includes at least first indication information, and the first indication information indicates the second device to establish a connection on the first channel. A first device operates on the first channel in a first time period group. The first device operates on a second channel in a second time period group. A plurality of time periods in the first time period group and a plurality of time periods in the second time period group alternate in sequence in time domain. Generally, because the first time period group is longer than the second channel time period group, compared with device discovery and connection performed in the second time period group, device discovery and connection performed in the first time period group, can reduce waiting time for point-to-point device discovery and connection.

## Description

### CROSS-REFERENCE TO RELATED APPLICATIONS

This application claims priority to Chinese Patent Application No. 202310203168.1, filed with the China National Intellectual Property Administration on February 22, 2023 and entitled "DEVICE COMMUNICATION METHOD, APPARATUS, AND SYSTEM, AND DEVICE", which is incorporated herein by reference in its entirety.

### TECHNICAL FIELD

This application relates to the field of communication technologies, and to a device communication method, apparatus, and system, and a device.

### BACKGROUND

A multi-screen collaboration application (for example, point-to-point projection from a mobile phone to a television) has become a core application of a laptop or television (television, TV) product. Peer-to-peer (Peer to Peer, P2P) device discovery and connection include three steps: device discovery, device connection, and data sending. Vendors in the industry use device discovery and connection time as core indicators of product experience.

To discover a device by a terminal device (for example, a mobile phone) in a P2P manner, the devices at two ends need to be on a same communication channel, and device discovery is initiated at a same channel frequency. Because the communication channel of the devices at the two ends is unknown, device discovery and connection are performed in a random collision manner. Discovery and connection of a point-to-point device are established on the basis of random collision of a channel. This is random and time-consuming, and has poor user experience.

### SUMMARY

This application provides a device communication method, apparatus, and system, and a device, to improve device discovery and connection efficiency. For example, in an existing multi-screen collaboration scenario, duration of a point-to-point device discovery and connection process of device discovery and connection performed by devices at two ends completely relying on random channel collision is reduced, and device discovery and connection efficiency is improved.

According to a first aspect, an embodiment of this application provides a device communication method, where the method includes:

A first device receives discovery request signaling of a second device on a first channel, where the first channel is a channel used by the first device to communicate with a third device, and the discovery request signaling is used by the second device to request device discovery; and
the first device sends discovery request response signaling to the second device.

The first device receives the discovery request signaling of the second device by using the first channel for communicating with the third device, so that a probability of receiving the discovery request signaling sent by the second device can be increased, and the discovery request signaling of the second device can be responded to quickly.

According to the first aspect, the method further includes:

The first device receives connection request signaling of the second device; and
the first device sends first control signaling, where the first control signaling includes first indication information, and the first indication information indicates the second device to establish a connection to the first device on the first channel.

For example, the first control signaling includes a MAC address of the first device, a MAC address of the second device, and first channel number information. Optionally, the first control signaling may further include an offset of the first control signaling relative to a first time period group or a second time period group, a period size of the first time period group, and a period size of the second time period group. This helps the second device determine a time domain location of the first channel.

The first control signaling carries the first indication information, to indicate the second device to perform device connection on the first channel. In comparison with a manner of random channel collision, this avoids a case in which effective communication cannot be established due to non-alignment of a same channel in time domain caused by random channel collision, and improves device connection efficiency.

In a possible implementation, the first device sends the first control signaling on the first channel or a second channel, where the second channel is a channel used by the first device to communicate with the second device.

In a possible implementation, the first device operates on the first channel in a first time period group, and the first device operates on the second channel in a second time period group, the first time period group includes a plurality of time periods, the second time period group includes a plurality of time periods, and the plurality of time periods in the first time period group and the plurality of time periods in the second time period group alternate in sequence in time domain.

In addition to sending the first control signaling on the first channel in the first time period group, the first device may further send the first control signaling on the second channel in the second time period group. The first control signaling is sent simultaneously on the two channels, thereby improving a success rate of sending the first control signaling.

In a possible implementation, a time period in the first time period group is greater than a time period in the second time period group. The first time period group is used as a channel for data communication between the first device and the third device, and the second time period group is used as a channel for data communication between the first device and the second device. To ensure normal data communication between the first device and the third device, the first device may configure the time period in the first time period group to be greater than the time period in the second time period group.

In a possible implementation, a frequency of the first channel is different from a frequency of the second channel. The first channel and the second channel are at different frequencies, thereby avoiding mutual signal interference when the first device performs data communication with the second device and the third device, and improving a communication success rate.

In a possible implementation, the first channel is a channel for communication between a television TV device and a wireless fidelity Wi-Fi network access point AP, and the second channel is a point-to-point P2P channel.

In a possible implementation, the first device is a TV device, the second device is a mobile phone device, and the third device is a Wi-Fi network AP.

According to the foregoing method, the discovery request signaling of the second device is received in the first time period group by using a feature that the first time period group is longer than the second time period group. In comparison with the conventional technology in which the discovery request signaling is received in the second time period group, a receiving success rate is improved. The first control signaling is sent, to indicate the second device to perform device connection. In comparison with performing device connection in the second time period group, the first control signaling indicates the second device to establish a connection on the second channel. This avoids a case in which effective communication cannot be established due to channel misalignment caused by random channel collision, and shortens time taken for device discovery and connection. This improves connection efficiency.

According to a second aspect, an embodiment of this application provides a device communication method. The method includes:

A second device sends discovery request signaling to a first device on a first channel, where the first channel is a channel used by the first device to communicate with a third device, and the discovery request signaling is used by the second device to request device discovery; and
the second device receives discovery request response signaling from the first device.

The second device sends the discovery request signaling to the first device by using the first channel for communication between the first device and the third device, so that a probability that the first device receives the discovery request signaling can be increased, and the first device can respond to the discovery request signaling of the second device quickly.

According to the first aspect, the method further includes:

The second device receives first control signaling of the first device, where the first control signaling includes first indication information, and the first indication information indicates the second device to establish a connection to the first device on the first channel.

The first control signaling carries the first indication information, to indicate the second device to perform device connection on the first channel. In comparison with a manner of random channel collision, this avoids a case in which effective communication cannot be established due to non-alignment of a same channel in time domain caused by random channel collision, and improves device connection efficiency.

In a possible implementation, the second device receives the first control signaling on the first channel or a second channel, where the second channel is a channel used by the first device to communicate with the second device.

In a possible implementation, the second device operates on a plurality of channels in a third time period group, and the second channel is one of the plurality of channels.

In a possible implementation, the second device receives the first control signaling in a first time period, the first time period is a time period in the third time period group, and the second device operates on the first channel in another time period in the third time period group after the first time period.

In a possible implementation, the first device is a television TV device, and the second device is a mobile phone device.

In a possible implementation, the first channel is a channel for communication between a TV device and a wireless fidelity Wi-Fi network access point AP, and the second channel is a point-to-point P2P channel.

In a possible implementation, the fourth time period includes a Wi-Fi channel 1, a Wi-Fi channel 6, and a Wi-Fi channel 11.

According to the foregoing method, the second device performs device connection on the indicated first channel based on the first control signaling. In comparison with performing device connection in the second time period group, this avoids a case in which effective communication cannot be established due to channel misalignment caused by random channel collision, and shortens time taken for device discovery and connection. This improves connection efficiency.

According to a third aspect, an embodiment of this application provides a device communication apparatus, including:
a receiving module, configured to receive, for a first device, discovery request signaling of a second device on a first channel, where the first channel is a channel used by the first device to communicate with a third device, and the discovery request signaling is used by the second device to request device discovery; and
a sending module, configured to send, for the first device, discovery request response signaling to the second device.

In a possible design, the receiving module receives connection request signaling of the second device; and
the sending module sends first control signaling, where the first control signaling includes first indication information, and the first indication information indicates the second device to establish a connection to the first device on the first channel.

In a possible design, the sending module sends the first control signaling on the first channel or a second channel, where the second channel is a channel used by the first device to communicate with the second device.

In a possible design, the apparatus further includes:
a processing module, configured to generate the discovery request response signaling and the first control signaling; and
a storage module, configured to store the discovery request response signaling and the first control signaling that are generated by the processing module.

In a possible design, the first device operates on the first channel in a first time period group, and the first device operates on the second channel in a second time period group, the first time period group includes a plurality of time periods, the second time period group includes a plurality of time periods, and the plurality of time periods in the first time period group and the plurality of time periods in the second time period group alternate in sequence in time domain.

In a possible design, a time period in the first time period group is greater than a time period in the second time period group.

In a possible design, a frequency of the first channel is different from a frequency of the second channel.

In a possible design, the first channel is a channel for communication between a television TV device and a wireless fidelity Wi-Fi network access point AP, and the second channel is a point-to-point P2P channel.

In a possible design, the first device is a TV device, the second device is a mobile phone device, and the third device is a Wi-Fi network AP.

According to a fourth aspect, an embodiment of this application provides a device communication apparatus, including:
a sending module, configured to send, for a second device, discovery request signaling to a first device on a first channel, where the first channel is a channel used by the first device to communicate with a third device, and the discovery request signaling is used by the second device to request device discovery; and
a receiving module, configured to receive, for the second device, discovery request response signaling from the first device.

In a possible design, the receiving module receives first control signaling of the first device, where the first control signaling includes first indication information, and the first indication information indicates the second device to establish a connection to the first device on the first channel.

In a possible design, the receiving module receives the first control signaling on the first channel or a second channel, where the second channel is a channel used by the first device to communicate with the second device.

In a possible design, the apparatus further includes:
a processing module, configured to generate the discovery request signaling; and
a storage module, configured to store the discovery request signaling generated by the processing module.

In a possible design, the second device operates on a plurality of channels in a third time period group, and the second channel is one of the plurality of channels.

In a possible design, the second device receives the first control signaling in a first time period, the first time period is a time period in the third time period group, and the second device operates on the first channel in another time period in the third time period group after the first time period.

In a possible design, the first device is a television TV device, and the second device is a mobile phone device.

In a possible design, the first channel is a channel for communication between a TV device and a wireless fidelity Wi-Fi network access point AP, and the second channel is a point-to-point P2P channel.

In a possible design, the fourth time period includes a Wi-Fi channel 1, a Wi-Fi channel 6, and a Wi-Fi channel 11.

According to a fifth aspect, an embodiment of this application provides a device communication apparatus, including:
a receiver, configured to receive, for a first device, discovery request signaling of a second device on a first channel, where the first channel is a channel used by the first device to communicate with a third device, and the discovery request signaling is used by the second device to request device discovery; and
a sender, configured to send, for the first device, discovery request response signaling to the second device.

In a possible design, the receiver receives connection request signaling of the second device; and
the sender sends first control signaling, where the first control signaling includes first indication information, and the first indication information indicates the second device to establish a connection to the first device on the first channel.

In a possible design, the sender sends the first control signaling on the first channel or a second channel, where the second channel is a channel used by the first device to communicate with the second device.

In a possible design, the apparatus further includes:
a processor, configured to generate the discovery request response signaling and the first control signaling; and
a memory, configured to store the discovery request response signaling and the first control signaling that are generated by the processor.

In a possible design, the first device operates on the first channel in a first time period group, and the first device operates on the second channel in a second time period group, the first time period group includes a plurality of time periods, the second time period group includes a plurality of time periods, and the plurality of time periods in the first time period group and the plurality of time periods in the second time period group alternate in sequence in time domain.

In a possible design, a time period in the first time period group is greater than a time period in the second time period group.

In a possible design, a frequency of the first channel is different from a frequency of the second channel.

In a possible design, the first channel is a channel for communication between a television TV device and a wireless fidelity Wi-Fi network access point AP, and the second channel is a point-to-point P2P channel.

In a possible design, the first device is a TV device, the second device is a mobile phone device, and the third device is a Wi-Fi network AP.

According to a sixth aspect, an embodiment of this application provides a device communication apparatus, including:
a sender, configured to send, for a second device, discovery request signaling to a first device on a first channel, where the first channel is a channel used by the first device to communicate with a third device, and the discovery request signaling is used by the second device to request device discovery; and
a receiver, configured to receive, for the second device, discovery request response signaling from the first device.

In a possible design, the receiver receives first control signaling from the first device, where the first control signaling includes first indication information, and the first indication information indicates the second device to establish a connection to the first device on the first channel.

In a possible design, the receiver receives the first control signaling on the first channel or a second channel, where the second channel is a channel used by the first device to communicate with the second device.

In a possible design, the apparatus further includes:
a processor, configured to generate the discovery request signaling; and
a memory, configured to store the discovery request signaling generated by the processing module.

In a possible design, the second device operates on a plurality of channels in a third time period group, and the second channel is one of the plurality of channels.

In a possible design, the second device receives the first control signaling in a first time period, the first time period is a time period in the third time period group, and the second device operates on the first channel in another time period in the third time period group after the first time period.

In a possible design, the first device is a television TV device, and the second device is a mobile phone device.

In a possible design, the first channel is a channel for communication between a TV device and a wireless fidelity Wi-Fi network access point AP, and the second channel is a point-to-point P2P channel.

In a possible design, the fourth time period includes a Wi-Fi channel 1, a Wi-Fi channel 6, and a Wi-Fi channel 11.

According to a seventh aspect, an embodiment of this application provides a communication system. The system includes the communication apparatus according to the fifth aspect and the communication apparatus according to the sixth aspect.

According to an eighth aspect, an embodiment of this application provides a computer-readable storage medium. The computer-readable storage medium stores computer instructions. When the computer instructions are run on a computer, the computer is enabled to perform the method used by the foregoing first device.

According to a ninth aspect, an embodiment of this application provides a computer-readable storage medium. The computer-readable storage medium stores computer instructions. When the computer instructions are run on a computer, the computer is enabled to perform the method used by the foregoing second device.

According to a tenth aspect, an embodiment of this application provides a chip, including a processor and a communication interface. The processor is configured to implement the method according to the first aspect, or configured to implement the method according to the second aspect. In a possible implementation, the chip system further includes the memory, configured to store a computer program. The chip system may include a chip, or may include a chip and another discrete component.

According to an eleventh aspect, a computer program product is provided. The computer program product includes computer program code. When the computer program code is run, the method in the first aspect or the second aspect is performed.

For beneficial effects of the third aspect to the eleventh aspect and the implementations of the third aspect to the eleventh aspect, refer to the descriptions of the beneficial effects of the first aspect or the second aspect and the implementations of the first aspect or the second aspect.

A channel in embodiments of this application is usually a frequency band with a fixed bandwidth and contiguous frequencies, for example, 20 MHz or 40 MHz. Channels are usually arranged based on channel numbers. The numbers are usually codes of several channels in a frequency range, and are used to represent a specific channel.

### BRIEF DESCRIPTION OF DRAWINGS

FIG. 1 is a diagram of a communication system according to an embodiment of this application;
FIG. 2 is a flowchart of device discovery according to an embodiment of this application;
FIG. 3 is a diagram of signal sending and receiving during device discovery and connection according to an embodiment of this application;
FIG. 4 is a diagram of signal sending and receiving during device discovery and connection according to an embodiment of this application;
FIG. 5 is a diagram of signal sending and receiving during device discovery and connection according to an embodiment of this application;
FIG. 6 is a diagram of a hardware device structure of a communication device according to an embodiment of this application;
FIG. 7 is a diagram of a hardware device structure of a communication device according to an embodiment of this application;
FIG. 8 is a diagram of a chip structure of a communication device according to an embodiment of this application; and
FIG. 9 is a diagram of a chip structure of a communication device according to an embodiment of this application.

### DESCRIPTION OF EMBODIMENTS

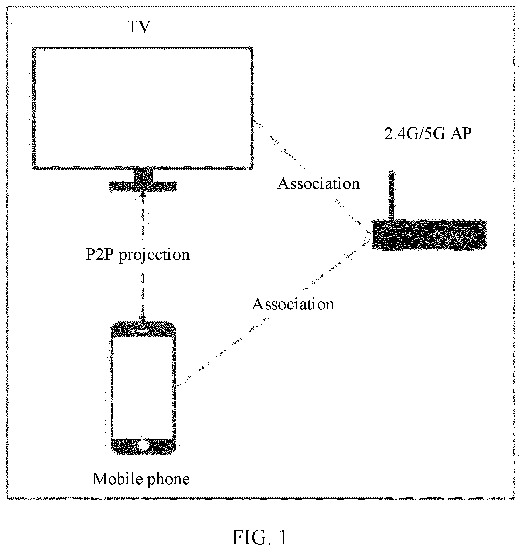

The following describes embodiments of this application with reference to the accompanying drawings in embodiments of this application. The technical solutions in embodiments of the present invention that are described below are applicable to a communication system. The communication system may include a network side device (access point, AP) and user equipment (for example, a television or a mobile phone) that communicates with the network side device. The user equipment may send and receive data on an operating channel on which the network side device is located, for example, on an unlicensed frequency band of 2.4G or 5G. The network side device receives, on the operating channel, the data sent by the user equipment. The communication system includes at least two user equipments, and one user equipment sends and receives data with another user equipment on an operating channel different from that of the network side device. FIG. 1 is an example of the communication system. The communication system shown in FIG. 1 includes a network side device (AP) and a plurality of user equipments (a TV and a mobile phone shown in FIG. 1) that communicate with the network side device. The user equipments communicate with each other.

In addition to the AP in Wi-Fi, the network side device may be a base station (a macro base station, a small/micro base station, a home base station, or the like) or a relay station. The base station may be, for example, a base transceiver station (base transceiver station, BTS) in a global system for mobile communication (global system for mobile communication, GSM) or a code division multiple access (code division multiple access, CDMA) network, or may be an NB (NodeB) in wideband code division multiple access (wideband code division multiple access, WCDMA), or may be an eNB or an eNodeB (Evolutional NodeB) in long term evolution (long term evolution, LTE), or may be a gNB in a future 5G network or a new radio (new radio, NR).

The user equipment may be a station in Wi-Fi, or may be another access terminal, a subscriber unit, a subscriber station, a mobile station, a remote station, a remote terminal, a mobile device, a user terminal, a terminal, a wireless communication device, a user agent, a user apparatus, or the like. The access terminal may be a handheld device having a wireless communication function, such as a cellular phone, a cordless phone, a session initiation protocol, SIP (session initiation protocol, SIP) phone, a wireless local loop (wireless local loop, WLL) station, a personal digital processing (personal digital assistant, PDA), or a television (TV), a computing device or another processing device connected to a wireless modem, a vehicle-mounted device, a wearable device, or the like.

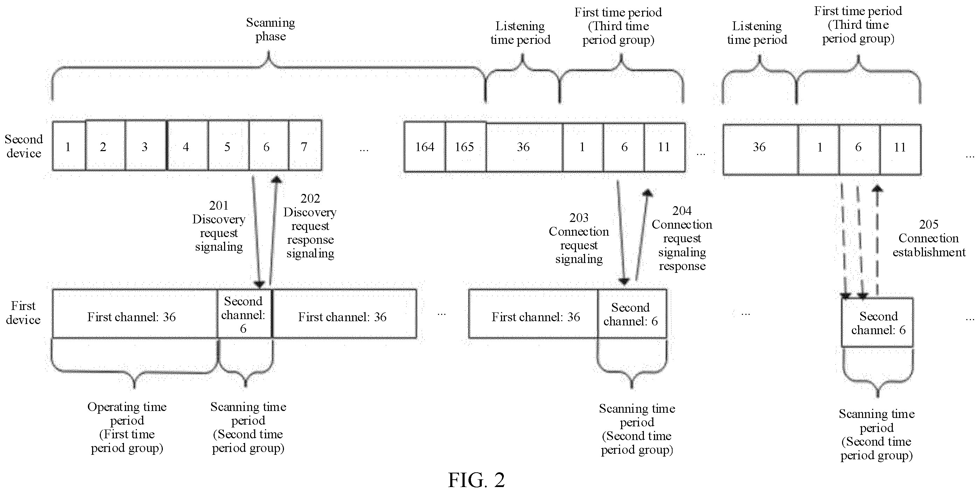

The following describes a general method for device communication between a first device and a second device with reference to FIG. 2.

The first device operates on a first channel, that is, a channel 36, in an operating time period. The first device operates on a second channel, that is, a channel 6, in a scanning time period. The operating time period and the scanning time period appear alternately.

In a process of starting device discovery and connection, the second device first goes through a scanning phase. The scanning phase includes 165 channels: a channel 1 to a channel 165. A Wi-Fi protocol defines four independent frequency bands: 2.4 GHz, 3.6 GHz, 4.9 GHz, and 5.8 GHz. Each frequency band is divided into several channels. The foregoing four independent frequency bands have a total of 165 channels, which are the channel 1 to the channel 165 in ascending order of frequencies. According to laws and regulations of different countries, a quantity of available channels is different. For example, in China, in a 5.8 GHz frequency band, only five channels 149, 153, 157, 161, and 165 are opened in China. In this embodiment, it is assumed that all the four frequency bands are available. Because the first device does not know a channel on which the second device actually operates, the first device needs to sequentially send discovery request signaling on all the available channels. After the scanning phase, a listening time period and a first time period appear alternately in sequence. The second device operates on a channel 36 in the listening time period. The second device operates on three channels in the first time period, that is, the channel 1, a channel 6, and a channel 11.

Step 201: A second device sends discovery request signaling, where the discovery request signaling is used by the second device to request device discovery. Before the second device establishes a device connection to the first device, the first device needs to first discover existence of the second device, and then the device connection can be established. The discovery request signaling in this embodiment may be a probe request (probe request) frame. Because the second device does not know the MAC address of the first device, a broadcast address in the probe request frame is configured as FF:FF:FF:FF:FF:FF. The request frame further includes information such as a transmission rate (support rate) supported by the second device, an extended transmission rate (extend support rate), and a high throughput/very high throughput capability (high throughput/very high throughput capability, HT/VHT) flag, to indicate some basic information of the second device.

In step 201, because the second device does not know the channel on which the first device operates in a scanning period, the probe request frame is sent on each channel in the scanning phase, that is, the channel 1 to the channel 165.

Step 202: After receiving the discovery request signaling of the second device, the first device sends a discovery request signaling response to the second device. The discovery request signaling response in this embodiment may be a probe response (probe response) frame. Information carried in the probe response frame is basically the same as that carried in the probe request frame, and also includes, for example, a transmission rate (support rate) supported by the first device, an extended transmission rate (extend support rate), and a high throughput/very high throughput capability (high throughput/very high throughput capability, HT/VHT) flag, to indicate some basic information of the first device. The probe response frame carries a MAC address of the sending device, so that a sender of the probe request frame, that is, the first device knows which device responds to the probe request frame.

Step 203: After receiving the discovery request response signaling, the second device sends connection request signaling to the first device in the first time period, where the first time period includes three channels: the channel 1, the channel 6, and the channel 11. The first time period and the listening time period appear alternately and periodically in sequence, where the listening time period is used by the second device to communicate with the AP associated with the second device. The connection request signaling in this embodiment may be a probe request frame. Because the second device already knows the MAC address of the first device in step 202, the broadcast address in the probe request frame is configured as the MAC address of the first device.

Step 204: The first device sends a connection request signaling response. The connection request signaling in this embodiment may be a probe response frame, and an information element (information element, IE) is carried in the frame. A direct sequence parameter set field (direct sequence parameter set, DSPS) carries a channel number of the second channel, and is used to instruct the second device to establish a connection on the second channel.

Step 205: After the second device and the first device complete sending and responding to the connection request signaling, the first device and the second device perform a connection establishment process on a subsequent second channel of the first device, to complete the device connection.

It can be learned that the connection between the first device and the second device is established based on random channel collision, and an overall process is highly random. The second device can perform device discovery and connection communication with the first device only when the second device just operates on the first channel of the first device. As a result, an entire device discovery and connection process is time-consuming, and user experience is poor.

Therefore, this embodiment provides a communication device discovery method. The method can reduce time taken for the device discovery connection process.

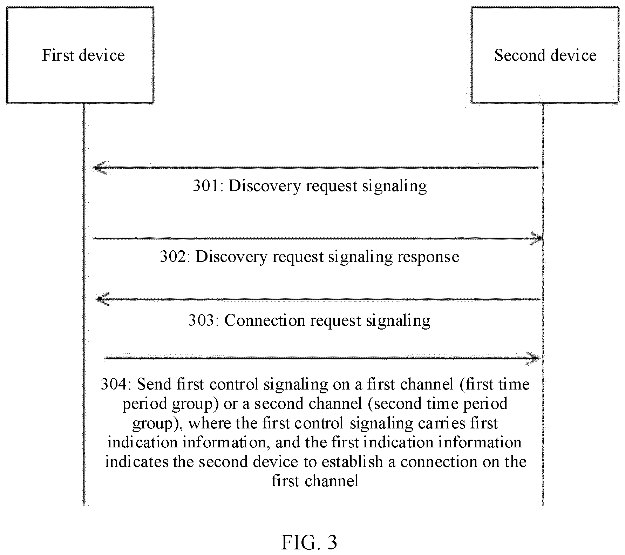

FIG. 3 is a flowchart of device communication according to an embodiment of this application.

Step 301: A second device sends discovery request signaling, where the discovery request signaling is used by the second device to request device discovery. In this embodiment, the discovery request signaling may be a probe request (probe request) frame, and content carried in the probe request frame is described in step 201. Details are not described again.

Step 302: After receiving the discovery request signaling of the second device, the first device sends a discovery request signaling response to the second device. It should be noted that the first device returns the discovery request signaling response on a channel on which the discovery request signaling is received. The discovery request signaling response in this embodiment may be a probe response (probe response) frame. Information carried in the probe response frame is basically the same as that carried in the probe request frame. Content carried in the probe response frame is described in step 202. Details are not described again.

Step 303: The second device sends connection request signaling, where the connection request signaling in this embodiment may be a probe request frame. Because the second device already knows the MAC address of the first device in step 302, the broadcast address in the probe request frame is configured as the MAC address of the first device.

In step 303, the connection request signaling may be sent in the first time period. After the second device receives the discovery request signaling response, if the scanning phase has ended, the second device sends the connection request signaling on any channel in the first time period.

Optionally, the connection request signaling may alternatively be sent in the scanning phase. After the second device receives the discovery request signaling response, the scanning phase does not end, and the connection request signaling may be sent on a remaining channel in the scanning phase.

Step 304: After receiving the connection request signaling of the second device, the first device sends the first control signaling on a channel on which the connection request signaling is received. In this embodiment, the first control signaling may be a probe response frame. A DSPS field carried in the probe response frame is used to carry first indication information. The first indication information indicates a channel number of the first channel on which the first device operates, and indicates the second device to perform a device connection process on the first channel.

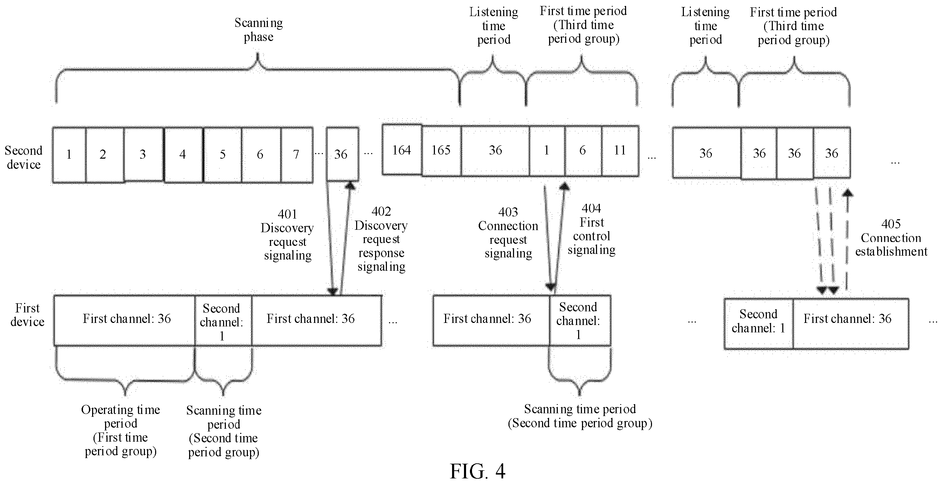

Refer to FIG. 4. The following describes a case in which the connection request signaling in step 303 is sent in the first time period.

Similarities between the scenario shown in FIG. 4 and the scenario shown in FIG. 2 are not described again. A difference lies in that the second channel of the first device is the channel 1.

FIG. 4 provides a device communication procedure, including steps 401, 402, 403, 404, and 405.

Step 401: The first device receives, on a first channel in a first time period group, the discovery request signaling sent by the second device.

Step 402: The first device sends discovery request response signaling to the second device on the first channel in the first time period group.

Step 403: The first device receives the connection request signaling of the second device on a second channel in a second time period group.

Step 404: After receiving the connection request signaling of the second device, the first device sends first control information on the second channel, where the first control signaling includes first indication information, and the first indication information indicates the second device to establish a connection to the first device on the first channel.

Step 405: After receiving the first control signaling, the second device switches, based on an indication of the first indication information, a channel on which the second device operates in the first time period to the first channel indicated by the first indication information, and establishes a connection to the first device on the first channel.

According to the foregoing steps, the discovery request signaling of the second device is received in the first time period group. In comparison with receiving the discovery request signaling in the second time period group that is short in time domain, a success rate of receiving the device discovery request signaling can be improved. The first control signaling is sent, and the first control signaling indicates the second device to establish the connection on the second channel. This can avoid channel misalignment caused by random channel collision in a third time period, and avoid a case in which two communication parties cannot establish effective communication. According to the foregoing method, time taken for device discovery and connection is shortened, and connection efficiency is improved.

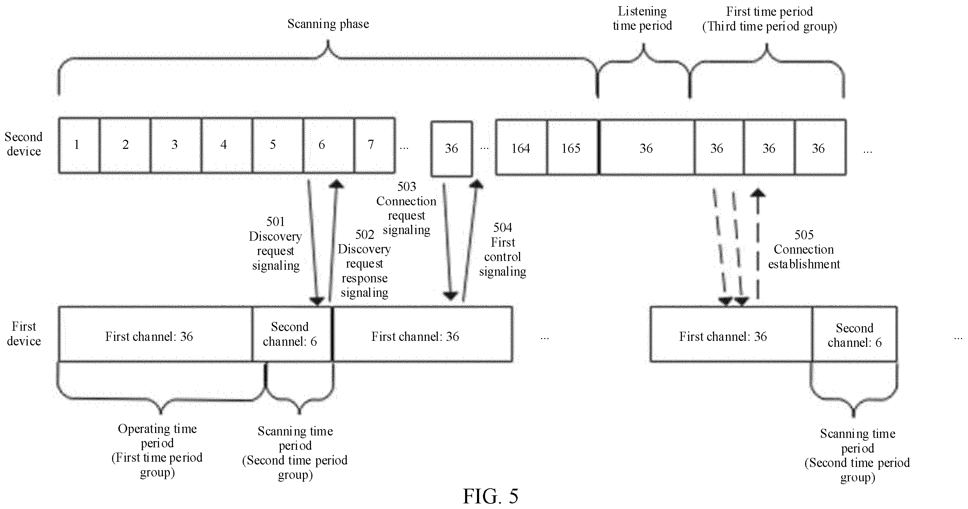

FIG. 5 shows a case in which the connection request signaling in step 303 is sent in the scanning phase. The scenario shown in FIG. 5 is the same as that in FIG. 2, and details are not described again. After receiving the discovery request response signaling of the first device, the second device may send the connection request signaling on a subsequent frequency band in the scanning phase, without waiting for the third time period to send the connection request signaling. This can also shorten time taken for device discovery and connection, and improve connection efficiency. Steps 501, 502, 503, 504, 505 are included.

Step 501: The first device receives, on the second channel in the second time period group, the discovery request signaling sent by the second device.

Step 502: The first device sends the discovery request response signaling to the second device on the second channel in the second time period group.

Step 503: After receiving the discovery request response signaling, the second device may send the connection request signaling on the first channel.

Step 504: The second device may send the first control signaling on the first channel.

Step 505: After receiving the first control signaling, the second device switches, based on an indication of the first indication information, a channel on which the second device operates in the first time period to the first channel indicated by the first indication information, and establishes a connection to the first device on the first channel.

In the foregoing implementation, the first channel may be a channel for communication between a television TV device and a wireless fidelity Wi-Fi network access point AP, and the second channel may be a point-to-point P2P channel.

In the foregoing implementation, the first device is a TV device, the second device is a mobile phone device, and the third device is a Wi-Fi network AP.

A channel in embodiments of this application is usually a frequency band with a fixed bandwidth and contiguous frequencies, for example, 20 MHz or 40 MHz. Channels are usually arranged based on channel numbers. The numbers are usually codes of several channels in a frequency range, and are used to represent a specific channel.

In the foregoing embodiment, after receiving the first control signaling, the second device may replace three channels in the scanning phase with the first channel indicated by the first control channel, thereby improving a success rate of device discovery and connection. In comparison with the conventional technology in which the second device can perform device discovery with the first device only on the second channel, this reduces communication interruption caused by channel mismatch, increases a connection speed, and improves user experience.

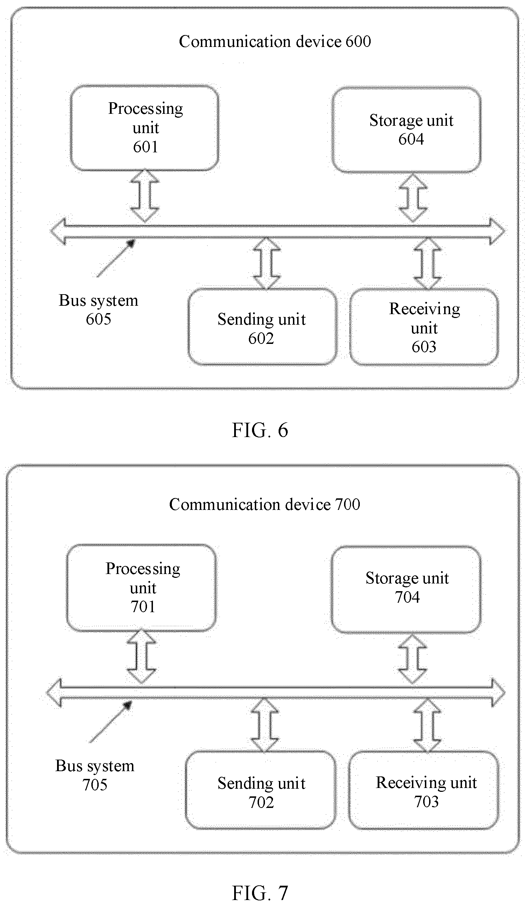

FIG. 6 is a possible diagram of a structure of the communication device in the foregoing embodiment.

A communication device 600 includes a sending unit 602 and a receiving unit 603. Optionally, the communication device 600 may further include a processing unit 601 and a storage unit 604. The storage unit 604 is separately connected to the processing unit 601, the sending unit 602, and the receiving unit 603. Further, the communication device 600 further includes a bus system 605. The processing unit 601, the sending unit 602, the receiving unit 603, and the storage unit 604 may be connected through the bus system 605.

The receiving unit 603 is configured to receive, for a first device, discovery request signaling of a second device on a first channel, where the first channel is a channel used by the first device to communicate with a third device, and the discovery request signaling is used by the second device to request device discovery.

The sending unit 602 is configured to send, for the first device, discovery request response signaling to the second device.

In a possible implementation, the receiving unit 603 receives connection request signaling of the second device.

The sending unit 602 sends first control signaling, where the first control signaling includes first indication information, and the first indication information indicates the second device to establish a connection to the first device on the first channel.

In a possible implementation, the sending unit 602 sends the first control signaling on the first channel or a second channel, where the second channel is a channel used by the first device to communicate with the second device.

In a possible implementation, the communication device 600 further includes:
a processing unit 601, configured to generate the discovery request response signaling and the first control signaling; and
a storage unit 604, configured to store the discovery request response signaling and the first control signaling that are generated by the processing module 601.

In a possible implementation, the first device operates on the first channel in a first time period group, and the first device operates on the second channel in a second time period group, the first time period group includes a plurality of time periods, the second time period group includes a plurality of time periods, and the plurality of time periods in the first time period group and the plurality of time periods in the second time period group alternate in sequence in time domain.

Optionally, a time period in the first time period group is greater than a time period in the second time period group.

Optionally, a frequency of the first channel is different from a frequency of the second channel.

In a possible implementation, the first channel is a channel for communication between a television TV device and a wireless fidelity Wi-Fi network access point AP, and the second channel is a point-to-point P2P channel.

Optionally, the first device is a TV device, the second device is a mobile phone device, and the third device is a Wi-Fi network AP.

FIG. 7 is a possible diagram of a structure of the communication device in the foregoing embodiment.

A communication device 700 includes a sending unit 702 and a receiving unit 703. Optionally, the communication device 700 may further include a processing unit 701 and a storage unit 704. The storage unit 704 is separately connected to the processing unit 701, the sending unit 702, and the receiving unit 703. Further, the communication device 700 further includes a bus system 705. The processing unit 701, the sending unit 702, the receiving unit 703, and the storage unit 704 may be connected through the bus system 705.

A sending unit 702 is configured to send, for a second device, discovery request signaling to a first device on a first channel, where the first channel is a channel used by the first device to communicate with a third device, and the discovery request signaling is used by the second device to request device discovery.

A receiving unit 703 is configured to receive, for the second device, discovery request response signaling from the first device.

In a possible implementation, the receiving unit 703 receives first control signaling from the first device, where the first control signaling includes first indication information, and the first indication information indicates the second device to establish a connection to the first device on the first channel.

In a possible implementation, the receiving unit 703 receives the first control signaling on the first channel or a second channel, where the second channel is a channel used by the first device to communicate with the second device.

In a possible implementation, the communication device 700 further includes:
a processing unit 701, configured to generate the discovery request signaling; and
a storage unit 704 is configured to store the discovery request signaling generated by the processing module 701.

In a possible implementation, the first device operates on the first channel in a first time period group, and the first device operates on the second channel in a second time period group, the first time period group includes a plurality of time periods, the second time period group includes a plurality of time periods, and the plurality of time periods in the first time period group and the plurality of time periods in the second time period group alternate in sequence in time domain.

Optionally, a time period in the first time period group is greater than a time period in the second time period group.

Optionally, a frequency of the first channel is different from a frequency of the second channel.

In a possible implementation, the first channel is a channel for communication between a television TV device and a wireless fidelity Wi-Fi network access point AP, and the second channel is a point-to-point P2P channel.

Optionally, the first device is a TV device, the second device is a mobile phone device, and the third device is a Wi-Fi network AP.

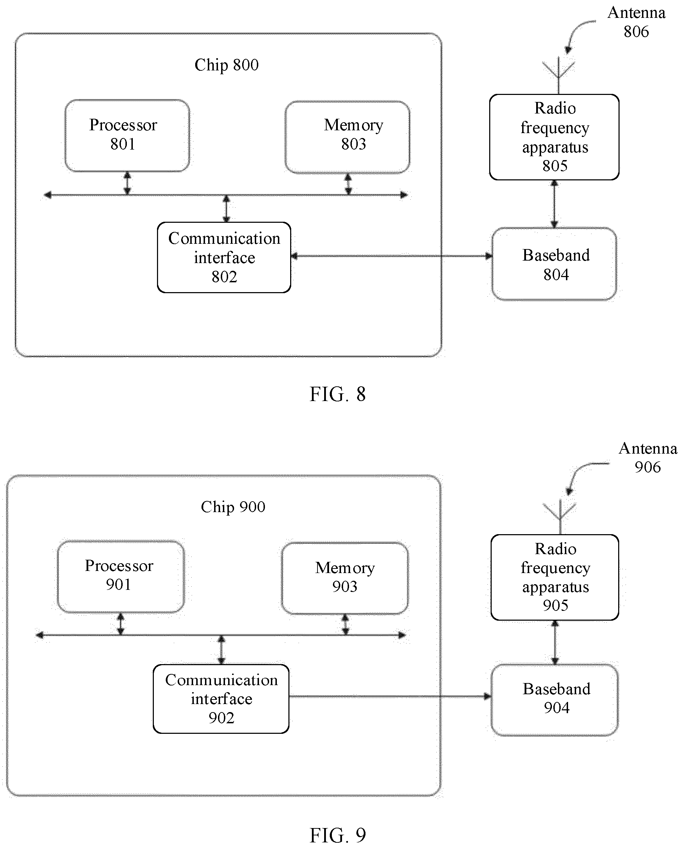

An embodiment of this application further provides a chip. As shown in FIG. 8, a chip 800 is configured to implement functions of the first device in the foregoing embodiments, and includes a processor 801 and a communication interface 802. The processor 801 is connected to the communication interface 802, and the communication interface 802 is configured to receive a signal and/or data that need/needs to be processed. The processor 801 obtains the signal and/or the data from the communication interface 802, and processes the signal and/or the data. The processor 801 is configured to invoke and run a computer program stored in a memory, to perform a corresponding operation and/or procedure performed by the first device in the communication method provided in this application. Further, an antenna 806 is included and is connected to a radio frequency apparatus 805. The radio frequency apparatus 805 sends a signal through the antenna 806, or sends a received signal to a baseband 804 for processing.

After receiving a discovery request signal of a second device on a first channel, the antenna 806 performs down-conversion by using the radio frequency apparatus 805, and transmits the discovery request signal to the baseband 804. The baseband 804 transmits the baseband signal to the processor 801 through the communication interface 802, to obtain the discovery request signaling of the second device.

The processor 801 generates discovery request response signaling, and sends the discovery request response signaling to the communication interface 802. The communication interface 802 sends first broadcast information and second broadcast information to the baseband 804. The first broadcast information and the second broadcast information are up-converted and amplified by the radio frequency apparatus 805 and then sent through the antenna 806.

After receiving the connection request signal of the second device, the antenna 806 performs down-conversion by using the radio frequency apparatus 805, and transmits the connection request signal to the baseband 804. The baseband 804 transmits the baseband signal to the processor 801 through the communication interface 802, to obtain the connection request signaling of the second device.

The processor 801 generates first control signaling, and sends the first control signaling to the communication interface 802. The communication interface 802 sends the first broadcast information and the second broadcast information to the baseband 804. The first broadcast information and the second broadcast information are up-converted and amplified by the radio frequency apparatus 805 and then sent through the antenna 806.

In a possible implementation, the processor 801 sends the first control signaling on the first channel or the second channel.

An embodiment of this application further provides a chip. As shown in FIG. 9, a chip 900 is configured to implement functions of the second device in the foregoing embodiments, and includes a processor 901 and a communication interface 902. The processor 901 is connected to the communication interface 902, and the communication interface 902 is configured to receive a signal and/or data that need/needs to be processed. The processor 901 obtains the signal and/or the data from the communication interface 902, and processes the signal and/or the data. The processor 901 is configured to invoke and run a computer program stored in a memory, to perform a corresponding operation and/or procedure performed by the first device in the communication method provided in this application. Further, an antenna 906 is included and is connected to a radio frequency apparatus 905. The radio frequency apparatus 905 sends a signal through the antenna 906, or sends a received signal to a baseband 904 for processing.

The processor 901 generates discovery request signaling, and sends the discovery request signaling to the communication interface 902. The communication interface 902 sends first broadcast information and second broadcast information to the baseband 904. The first broadcast information and the second broadcast information are up-converted and amplified by the radio frequency apparatus 905 and then sent through the antenna 906.

After receiving a discovery request response signal of a second device on a first channel, the antenna 906 performs down-conversion by using the radio frequency apparatus 905, and transmits the discovery request signal to the baseband 904. The baseband 904 transmits the baseband signal to the processor 901 through the communication interface 902, to obtain discovery request response signaling of the first device.

After receiving a first control signal of the first device, the antenna 906 performs down-conversion by using the radio frequency apparatus 905, and transmits the first control signal to the baseband 904. The baseband 904 transmits the baseband signal to the processor 901 through the communication interface 902, to obtain first control signaling of the second device. The first control signaling includes first indication information. A connection is established to the first device on the first channel indicated by the first indication information.

The memory and the memory in the foregoing embodiments may be physically independent units, or the memory may be integrated with the processor.

In addition, this application provides a computer-readable storage medium. The computer-readable storage medium stores computer instructions. When the computer instructions are run on a computer, the computer is enabled to perform corresponding operations and/or procedures performed by the first device or the second device in the method embodiments.

This application further provides a communication system. The communication system includes the first device and the second device mentioned in the foregoing embodiments.

In the foregoing embodiments, the processor may be a central processing unit (central processing unit, CPU), a microprocessor, an application-specific integrated circuit (application-specific integrated circuit, ASIC), one or more integrated circuits configured to control execution of programs in the technical solutions of this application, or the like. For example, the processor may be a digital signal processor device, a microprocessor device, an analogto-digital converter, or a digital-to-analog converter. The processor may allocate control and signal processing functions of a terminal device or a network device among these devices based on respective functions of these devices. In addition, the processor may have functions for operating one or more software programs, and the software programs may be stored in the memory. The functions of the processor may be implemented by hardware, or may be implemented by hardware executing corresponding software. The hardware or the software includes one or more modules corresponding to the foregoing function.

The memory may be a read-only memory (read-only memory, ROM), another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, any other medium that can be used to carry or store expected program code in a form of an instruction or a data structure and that can be accessed by a computer, or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the part contributing to the conventional technology in the technical solutions of this application or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. The protection scope of this application shall be subject to the protection scope of the claims.

## Claims

1. A device communication method, wherein the method comprises:
receiving, by a first device, discovery request signaling of a second device on a first channel, wherein the first channel is a channel for data communication with the first device, and the discovery request signaling is used by the second device to request device discovery; and
sending, by the first device, discovery request response signaling to the second device.

2. The method according to claim 1, wherein the method further comprises:
receiving, by the first device, connection request signaling of the second device; and
sending, by the first device, first control signaling, wherein the first control signaling comprises first indication information, and the first indication information indicates the second device to establish a connection to the first device on the first channel.

3. The method according to claim 2, wherein
the first device sends the first control signaling on the first channel or a second channel, wherein the second channel is a channel used by the first device to communicate with the second device.

4. The method according to claim 3, wherein
the first device operates on the first channel in a first time period group, and the first device operates on the second channel in a second time period group, the first time period group comprises a plurality of time periods, the second time period group comprises a plurality of time periods, and the plurality of time periods in the first time period group and the plurality of time periods in the second time period group alternate in sequence in time domain.

5. The method according to claim 4, wherein
a time period in the first time period group is greater than a time period in the second time period group.

6. The method according to any one of claims 3 to 5, wherein
a frequency of the first channel is different from a frequency of the second channel.

7. The method according to any one of claims 1 to 6, wherein the first channel is a channel for communication between a television TV device and a wireless fidelity Wi-Fi network access point AP, and the second channel is a point-to-point P2P channel.

8. The method according to any one of claims 1 to 7, wherein the first device is the TV device, the second device is a mobile phone device, and the third device is a Wi-Fi network AP.

9. A communication device discovery method, wherein the method comprises:
sending, by a second device, discovery request signaling to a first device on a first channel, wherein the first channel is a channel used by the first device to communicate with a third device, and the discovery request signaling is used by the second device to request device discovery; and
receiving, by the second device, discovery request response signaling from the first device.

10. The method according to claim 9, wherein the method further comprises:
receiving, by the second device, first control signaling of the first device, wherein the first control signaling comprises first indication information, and the first indication information indicates the second device to establish a connection to the first device on the first channel.

11. The method according to claim 10, wherein the second device receives the first control signaling on the first channel or a second channel, and the second channel is a channel used by the first device to communicate with the second device.

12. The method according to claim 11, wherein the second device operates on a plurality of channels in a third time period group, and the second channel is one of the plurality of channels.

13. The method according to claim 12, wherein the second device receives the first control signaling in a first time period, the first time period is a time period in the third time period group, and the second device operates on the first channel in another time period in the third time period group after the first time period.

14. The method according to any one of claims 9 to 13, wherein the first device is a television TV device, and the second device is a mobile phone device.

15. The method according to any one of claims 9 to 13, wherein the first channel is a channel for communication between a TV device and a wireless fidelity Wi-Fi network access point AP, and the second channel is a point-to-point P2P channel.

16. The method according to any one of claims 9 to 13, wherein the fourth time period comprises a Wi-Fi channel 1, a channel 6, and a channel 11.

17. A device communication apparatus, comprising:
a receiving unit, configured to receive, for a first device, discovery request signaling of a second device on a first channel, wherein the first channel is a channel used by the first device to communicate with a third device, and the discovery request signaling is used by the second device to request device discovery; and
a sending unit, configured to send, for the first device, discovery request response signaling to the second device.

18. The apparatus according to claim 17, wherein
the receiving unit receives connection request signaling of the second device; and
the sending unit sends first control signaling, wherein the first control signaling comprises first indication information, and the first indication information indicates the second device to establish a connection to the first device on the first channel.

19. The apparatus according to claim 18, wherein
the sending unit sends the first control signaling on the first channel or a second channel, wherein the second channel is a channel used by the first device to communicate with the second device.

20. The apparatus according to any one of claims 17 to 19, further comprising:
a processing unit, configured to generate the discovery request response signaling and the first control signaling; and
a storage unit, configured to store the discovery request response signaling and the first control signaling that are generated by the processing module.

21. The apparatus according to claim 20, wherein
the first device operates on the first channel in a first time period group, and the first device operates on the second channel in a second time period group, the first time period group comprises a plurality of time periods, the second time period group comprises a plurality of time periods, and the plurality of time periods in the first time period group and the plurality of time periods in the second time period group alternate in sequence in time domain.

22. The apparatus according to claim 21, wherein
a time period in the first time period group is greater than a time period in the second time period group.

23. The apparatus according to any one of claims 17 to 22, wherein
a frequency of the first channel is different from a frequency of the second channel.

24. The apparatus according to any one of claims 17 to 22, wherein the first channel is a channel for communication between a television TV device and a wireless fidelity Wi-Fi network access point AP, and the second channel is a point-to-point P2P channel.

25. The apparatus according to any one of claims 17 to 22, wherein the first device is a TV device, the second device is a mobile phone device, and the third device is a Wi-Fi network AP.

26. A device communication apparatus, comprising:
a sending unit, configured to send, for a second device, discovery request signaling to a first device on a first channel, wherein the first channel is a channel used by the first device to communicate with a third device, and the discovery request signaling is used by the second device to request device discovery; and
a receiving unit, configured to receive, for the second device, discovery request response signaling from the first device.

27. The apparatus according to claim 26, wherein
the receiving unit receives first control signaling of the first device, wherein the first control signaling comprises first indication information, and the first indication information indicates the second device to establish a connection to the first device on the first channel.

28. The apparatus according to claim 27, wherein
the receiving unit receives the first control signaling on the first channel or a second channel, wherein the second channel is a channel used by the first device to communicate with the second device.

29. The apparatus according to claim 28, further comprising:
a processing unit, configured to generate the discovery request signaling; and
a storage unit, configured to store the discovery request signaling generated by the processing module.

30. The apparatus according to claim 29, wherein
the second device operates on a plurality of channels in a third time period group, and the second channel is one of the plurality of channels.

31. The apparatus according to claim 30, wherein
the second device receives the first control signaling in a first time period, the first time period is a time period in the third time period group, and the second device operates on the first channel in another time period in the third time period group after the first time period.

32. The apparatus according to any one of claims 26 to 31, wherein
the first device is a television TV device, and the second device is a mobile phone device.

33. The apparatus according to any one of claims 26 to 31, wherein
the first channel is a channel for communication between a TV device and a wireless fidelity Wi-Fi network access point AP, and the second channel is a point-to-point P2P channel.

34. The apparatus according to any one of claims 26 to 31, wherein
the fourth time period comprises a Wi-Fi channel 1, a channel 6, and a channel 11.

35. A device communication apparatus, comprising:
a receiver, configured to receive, for a first device, discovery request signaling of a second device on a first channel, wherein the first channel is a channel used by the first device to communicate with a third device, and the discovery request signaling is used by the second device to request device discovery; and
a sender, configured to send, for the first device, discovery request response signaling to the second device.

36. The apparatus according to claim 35, wherein
the receiver receives connection request signaling of the second device; and
the sender sends first control signaling, wherein the first control signaling comprises first indication information, and the first indication information indicates the second device to establish a connection to the first device on the first channel.

37. The apparatus according to claim 36, wherein
the sender sends the first control signaling on the first channel or a second channel, wherein the second channel is a channel used by the first device to communicate with the second device.

38. The apparatus according to any one of claims 35 to 37, further comprising:
a processor, configured to generate the discovery request response signaling and the first control signaling; and
a memory, configured to store the discovery request response signaling and the first control signaling that are generated by the processor.

39. The apparatus according to claim 38, wherein
the first device operates on the first channel in a first time period group, and the first device operates on the second channel in a second time period group, the first time period group comprises a plurality of time periods, the second time period group comprises a plurality of time periods, and the plurality of time periods in the first time period group and the plurality of time periods in the second time period group alternate in sequence in time domain.

40. The apparatus according to claim 39, wherein
a time period in the first time period group is greater than a time period in the second time period group.

41. The apparatus according to any one of claims 35 to 40, wherein
a frequency of the first channel is different from a frequency of the second channel.

42. The apparatus according to any one of claims 35 to 41, wherein the first channel is a channel for communication between a television TV device and a wireless fidelity Wi-Fi network access point AP, and the second channel is a point-to-point P2P channel.

43. The apparatus according to any one of claims 35 to 41, wherein the first device is a TV device, the second device is a mobile phone device, and the third device is a Wi-Fi network AP.

44. A device communication apparatus, comprising:
a sender, configured to send, for a second device, discovery request signaling to a first device on a first channel, wherein the first channel is a channel used by the first device to communicate with a third device, and the discovery request signaling is used by the second device to request device discovery; and
a receiver, configured to receive, for the second device, discovery request response signaling from the first device.

45. The apparatus according to claim 44, wherein
the receiver receives first control signaling of the first device, wherein the first control signaling comprises first indication information, and the first indication information indicates the second device to establish a connection to the first device on the first channel.

46. The apparatus according to claim 45, wherein
the receiver receives the first control signaling on the first channel or a second channel, wherein the second channel is a channel used by the first device to communicate with the second device.

47. The apparatus according to claim 46, further comprising:
a processor, configured to generate the discovery request signaling; and
a memory, configured to store the discovery request signaling generated by the processor.

48. The apparatus according to claim 47, wherein
the second device operates on a plurality of channels in a third time period group, and the second channel is one of the plurality of channels.

49. The apparatus according to claim 48, wherein
the second device receives the first control signaling in a first time period, the first time period is a time period in the third time period group, and the second device operates on the first channel in another time period in the third time period group after the first time period.

50. The apparatus according to any one of claims 44 to 49, wherein
the first device is a television TV device, and the second device is a mobile phone device.

51. The apparatus according to any one of claims 44 to 49, wherein
the first channel is a channel for communication between a TV device and a wireless fidelity Wi-Fi network access point AP, and the second channel is a point-to-point P2P channel.

52. The apparatus according to any one of claims 44 to 49, wherein
the fourth time period comprises a Wi-Fi channel 1, a channel 6, and a channel 11.

53. A device communication system, comprising the apparatus according to any one of claims 35 to 43 and the apparatus according to any one of claims 44 to 52.

54. A computer-readable storage medium, wherein the computer-readable storage medium stores computer instructions, and when the computer instructions are run on a computer, the computer is enabled to perform the method according to any one of claims 1 to 16.

55. A chip, comprising a processor and a communication interface, wherein the processor is configured to implement the method according to any one of claims 1 to 8, or is configured to implement the method according to any one of claims 9 to 16.
